# EUROPEAN PATENT SPECIFICATION

(11) **EP 0 783 655 B1**
(45) Date of publication and mention of the grant of the patent: **23.06.1999**
(21) Application number: 94927856.8
(22) Date of filing: 08.08.1994
(51) Int. Cl.: F24F 3/06, F24F 12/00

(54) **ROOM ATMOSPHERE CONDITIONING UNIT FOR A HEATING, COOLING AND VENTILATING SYSTEM**
ZIMMERKLIMAANLAGE FÜR EIN HEIZUNGS-, KÜHLUNGS- UND LÜFTUNGSSYSTEM
UNITE DE CONDITIONNEMENT D'AIR D'UNE PIECE POUR UN SYSTEME DE CHAUFFAGE, DE REFROIDISSEMENT ET DE VENTILATION

(43) Date of publication of application: 16.07.1997
(60) Divisional application: 98204140.2
(73) Proprietor: Van Holsteijn & Kemna Special Products B.V., 2611 XH Delft (NL)
(72) Inventor: Kemna, René, Bertinus, Joannes, NL-2628 BM Delft (NL); Van Holsteijn, Robertus, Cornelis, Adrianus, NL-2636 HS Schipluiden (NL)
(74) Representative: Mertens, Hans Victor
(86) International application number: NL9400185
(87) International publication number: WO9605473

(56) References cited:
- EP-A- 0 508 766
- GB-A- 2 242 515
- US-A- 3 969 860

## Description

The present invention relates to a room atmosphere conditioning unit for conditioning the atmosphere in a room of a building, comprising: first heat exchanging means; and a ventilating unit containing at least one fan for drawing in air directly from outside the building through an inlet duct and through the first heat exchanging means into the room, and blowing air out of the room through the first heat exchanging means and through an outlet duct. Such a room atmosphere conditioning unit is known from GB-A-2 242 515.

In the past, a great variety of systems has been proposed and used for heating, cooling and/or ventilating a space such that agreeable living or working conditions prevail in the space which can be for example a room in a house, apartment or office.

Rooms in which the heat exchanging means are situated can be in one and the same building or in different buildings.

A conventional, simple and very common system is a central heating system comprising a centrally installed burner/heat-exchanger unit for heating water that is pumped in a loop pipe system to various radiators. Each of the radiators is provided with a manually operated valve or a thermostatically operated valve allowing hot water in each radiator or blocking the flow of water to the radiator. Usually only in the main living room the temperature is sensed for the control of the operation of the burner/heat-exchanger unit and the pump. As a consequence, the temperature in the main living room is controlled best, whereas the control of the temperature in the other room leaves a lot to be desired.

Hitherto, the ventilation of rooms has been mainly natural or mechanical, local (i.e. for one room or for a small number of rooms) or central. In a central ventilation system, a duct system is used leading to at least the most frequently used rooms for mechanically removing air from these rooms and out of the house. The air removed is replaced by air drawn in from outside the house or from other rooms. In a further development, the air is drawn into the house, fed into one or more rooms and in a balanced way removed out of the house via other rooms, regaining the heat that has been supplied to the air before distributing it in the house, or the heat that has accumulated in the air in its passage through the house.

A disadvantage of the known centrally controlled systems is that they do not provide for a setting of heating, cooling or ventilation locally depending on the desired temperature and quality of atmosphere in each room, which may be different for each room depending on its use.

The object of the invention is to provide a room atmosphere conditioning unit for a heating, cooling and ventilating system which provides an improved individual conditioning of the atmosphere in each room in a simple arrangement which can be easily built into existing and new buildings.

Another object of the invention is to reduce ventilation losses.

These and other objects are attained with the room atmosphere conditioning unit according to the invention, which is characterized in that the first heat exchanging means and the ventilating unit are integrated with second heat exchaning means adapted to be connected to a fluid pipe system for distributing a heating fluid or a cooling fluid from a heat generating means or a cold generating means, respectively, to the second heat exchanging means. The first heat exchanging means are integrated with the second heat exchanging means and the ventilating unit to form a room atmosphere conditioning unit, to make the room atmosphere conditioning unit compact and to reduce its costs. With the arrangement according to the invention each separate room can be mechanically ventilated in a balanced way independent from the ventilation of other rooms, whereas the heat in the ventilating air is recovered. Fresh outside air is used for ventilating each room. The temperature in each room is controlled by the second heat exchanging means providing an indirect radiator or convector type heating.

In a preferred embodiment the unit according to the invention comprises means for measuring the quality of the air in each room and operating the fan or fans of the ventilating unit in a room when the air quality in the room is below a predetermined level. Accordingly, a ventilating unit operates to maintain a predetermined air quality in the corresponding room, and uses no energy when the air quality is sufficiently high. Air quality may e.g. refer to the concentration of a particular gas in the air, such as oxygen or carbon dioxide, or to the concentration and/or size of dust particles in the air, all of which factors can be measured and used for operating the fan or fans. A ventilating unit may comprise means for filtering and/or humidifying the air.

In a preferred embodiment the room atmosphere conditioning unit comprises a sandwiched structure of the first heat exchanging means, a layer of insulating material, and the second heat exchanging means, the first and the second heat exchanging means extending generally vertically, which provides for a relatively thin unit having large heat exchanging areas, so that a high efficiency can be reached, whereas the required space is small. This embodiment of the room atmosphere conditioning unit can be built in a recess of a wall of the room, if desired.

In another preferred embodiment the room atmosphere conditioning unit comprises a stacked structure, the first heat exchanging means being placed above the second heat exchanging means. As a result of this combination of the first heat exchanging means with the second heat exchanging means no further provision need be made for heating cold ventilating air.

In a further preferred embodiment the air inlet duct and the air outlet duct consist of a narrow slit having a width which is generally equal to the width of the room atmosphere conditioning unit. With this measure the renewal of the air in the room is improved when compared to known ventilating systems bringing air into or out of a room at one point.

To save energy, the room atmosphere conditioning unit is adapted to remove air from the room near the bottom side of the unit.

In the following the invention is explained in further detail with reference to the accompanying drawing, in which:
Fig. 1 shows a first embodiment of a room atmosphere conditioning unit according to the invention;
Fig. 2 shows a second embodiment of a room atmosphere conditioning unit according to the invention;
Fig. 3 shows a third embodiment of a room atmosphere conditioning unit according to the invention;
Fig. 4 schematically shows a building with two separate rooms, the building being provided with a heating or cooling and ventilating system;
Fig. 5 shows a diagram of a central heating system;
Fig. 6 shows a diagram of a combined central heating and domestic water heating system;
Fig. 7 shows a diagram of another embodiment of a central heating and domestic water heating system;
Fig. 8 shows a diagram of a central heating/cooling and domestic water heating and ventilating system;
Fig. 9 shows an alternative embodiment of the system of Fig. 8;
Fig. 10 shows a cross-section of an integrated line for use in the system of Fig. 5;
Fig. 11 shows a cross-section of an integrated line for use in the system of Figs. 8 and 9; and
Fig. 12 shows a cross-section of an integrated line for use in the system of Figs. 8 and 9.

In the different figures, similar parts or parts having a similar function are designated by the same reference symbols.

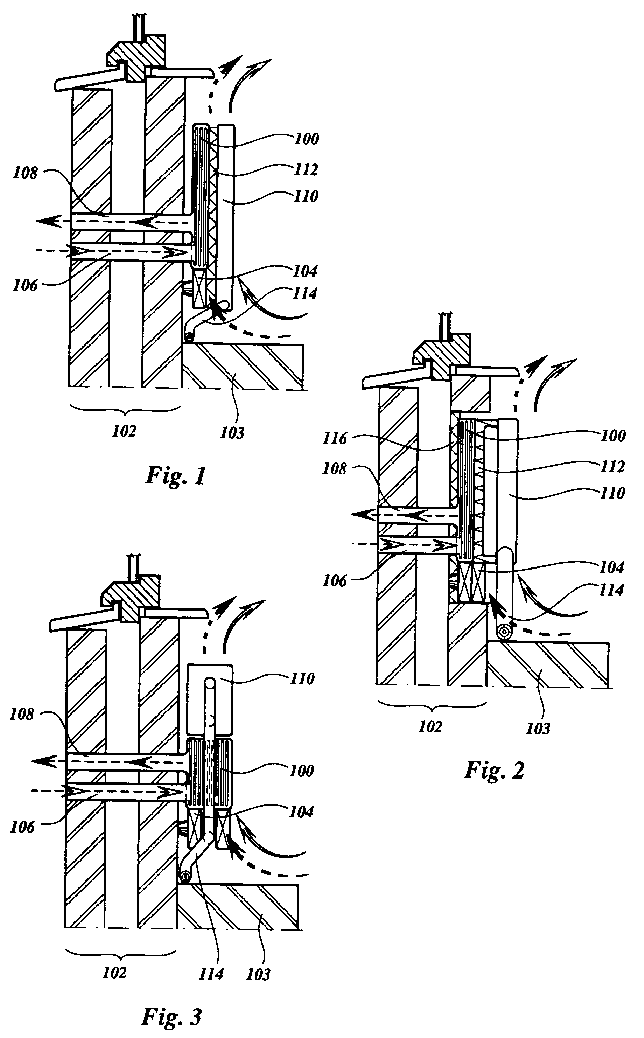

Fig. 1 shows a plate-type air/air heat exchanger 100 arranged in a room of a building against a hollow wall 102 near the floor 103. One or more fans 104 are arranged for drawing air from outside the building through an inlet duct 106 in the hollow wall 102, and for blowing the air into the room through the heat exchanger 100. On the other hand, the fans 104 are arranged for drawing air from the room through the heat exchanger 100 and through an outlet duct 108 out of the building. In this way, whenever necessary a balanced mechanical ventilation with heat recovery is provided for. The heat exchanger 100 is combined with a fluid/air heat exchanger 110, which is separated from the heat exchanger 100 by a layer of insulating material 112. The heat exchanger 110 has a heating or cooling fluid inlet and outlet 114. The combination of the heat exchanger 100 and the heat exchanger 110 provides a room atmosphere conditioning unit which can both control the temperature and the air quality in the room.

Fig. 2 shows a similar arrangement as fig. 1, the room atmosphere conditioning unit being partly built in a recess in the hollow wall 102 and being backed by insulating material 116.

In the arrangement of Fig. 3, a fluid/air heat exchanger 110 is situated above an air/air heat exchanger 100 providing a different type of room atmosphere conditioning unit.

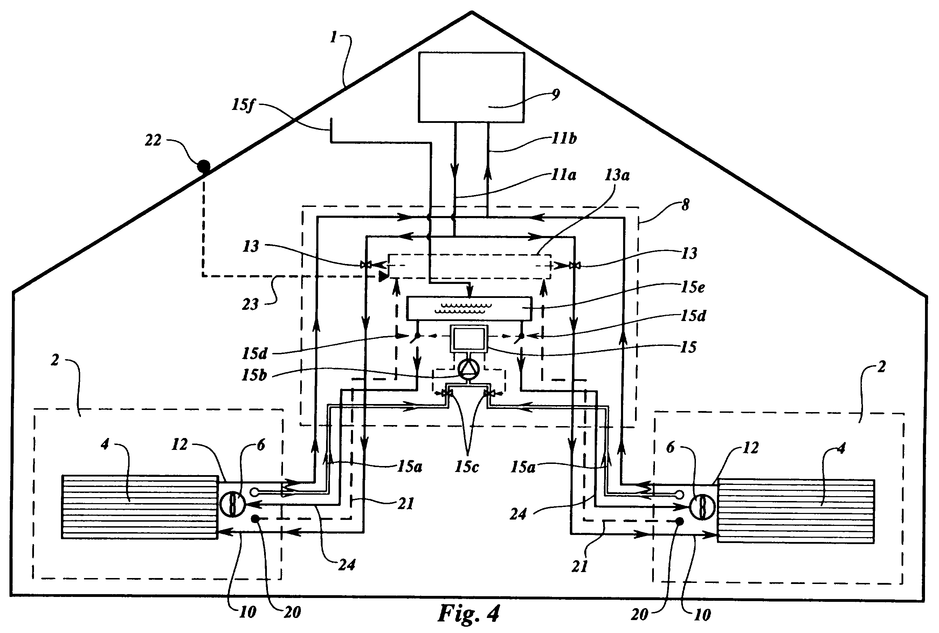

Fig. 4 schematically shows a building 1, e.g. a house, comprising two separate rooms 2 which are indicated by dashed lines. Each room 2 contains a radiator 4 for heating or cooling the room 2, which radiators 4 are coupled to respective ventilating units 6 for periodically refreshing the air in the respective room 2. Each radiator 4 is connected to a central control unit 8 located centrally in the building 1, by means of a feed pipe 10 for feeding a heating or a cooling fluid from a central heating/cooling device 9 through control unit 8 to the radiator 4, and a return pipe 12 for feeding back the heating or cooling fluid from the radiator 4 to the central heating/cooling device 9. The heating or cooling fluid is supplied to the control unit 8 by the central heating/cooling device 9 through feed and return pipes lla, llb. Each ventilating unit 6 is connected to the atmosphere outside the building by an inlet duct for feeding in outside air to the ventilating unit 6 and to the room 2, and an outlet duct for feeding air from the room 2 out of the building 1, and may be constructed as shown in Figs. 1-3, comprising an air/air heat exchanger 100.

Furthermore, each room 2 comprises a temperature sensor 20, whereas an additional temperature sensor 22 is located outside the building. The temperature sensors 20 and 22 are connected to the central control unit 8 by leads 21 and 23, respectively. Each ventilating unit 6 is powered and controlled from the central control unit 8 via electrical leads 24.

The heating and ventilating system of Fig. 1 operates as follows. The flow of heating or cooling fluid through the feed and return pipes 10, 12 is controlled by valves 13, which are operated by an electronic device 13a inside the central control unit 8, amongst others on the basis of information from the temperature sensors 20 and 22 and on the basis of the temperature desired by the user of the room(s). For each separate room 2 the temperature is measured with the temperature sensor 20 and compared with the outside temperature measured by the sensor 22 in the central control unit 8. If a heating or cooling demand is established in one of the rooms 2, the central heating/cooling device 9 will be operated to generate heat or cold which is transported through central control unit 8, feed pipe 10 and return pipe 12 to the radiator 4. This process will continue until the temperature sensor 20 establishes that the desired temperature in the room 2 has been reached. The operation of the ventilating unit 6 is controlled by the central control unit 8, possibly taking into account the temperature measured by the sensors 20 and 22.

For this purpose the central control unit 8 comprises a central gas analysis unit 15, which analyses the air quality in the separate rooms by way of taking samples. These samples are supplied through air ducts 15a between the rooms 2 and the central control unit 8 by means of a vacuum pump 15b. A specific air duct 15a can be connected to the central gas analysis unit 15 by operating a valve 15c. If the central gas analysis unit 15 establishes a poor air quality in a room 2, a switch 15d is closed for providing DC power from a transformer/rectifier unit 15e to the corresponding ventilating unit 6 by the electrical lead 24. The transformer/rectifier unit 15e is connected to a mains power supply 15f and contains a high efficiency central transformer.

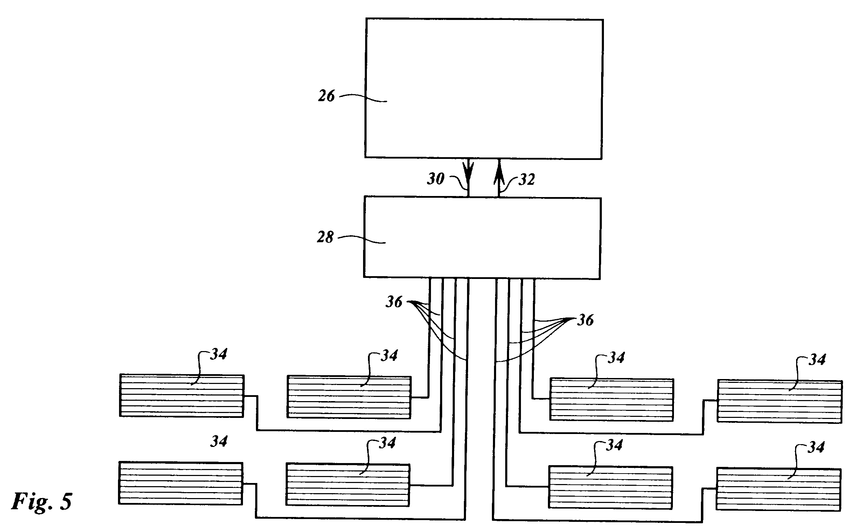

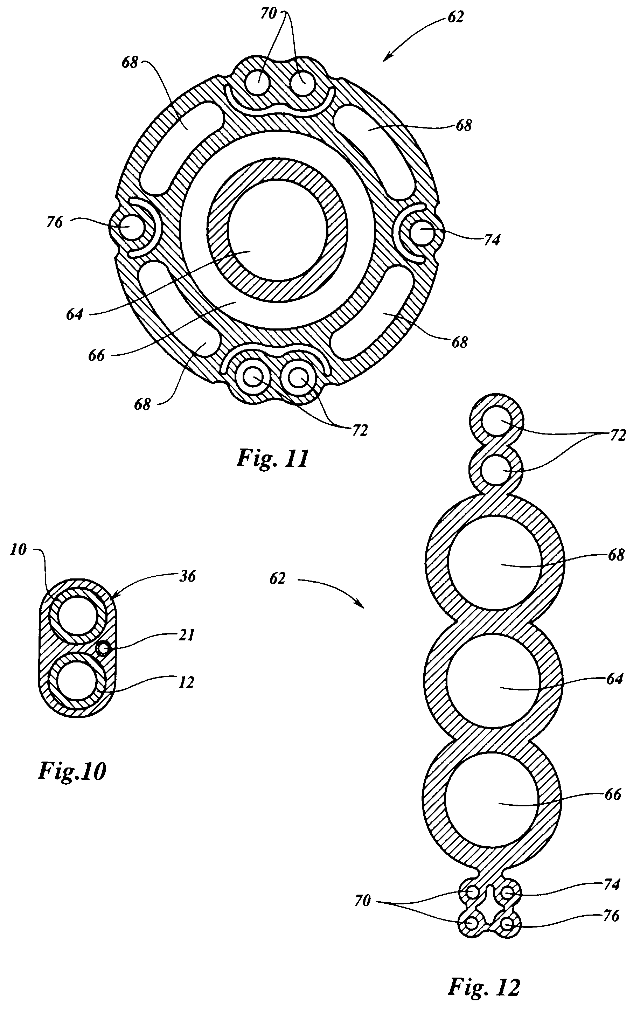

The system according to Fig. 5 comprises a gas-fired central heating device 26, a central control unit 28 connected to the central heating device 26 by a feed pipe 30 and a return pipe 32 for a heating fluid, and eight radiators 34 connected to the central control unit 28 by feed and return pipes symbolically shown by single lines 36. Each radiator 34 is located in a separate room of a building, as has been explained in connection with Fig. 4, while each room contains a sensor (not shown) connected to the central control unit 28. When the sensor detects a room temperature below a predetermined value, a corresponding data signal is sent to the central control unit, which starts the central heating device 26 and provides a connection in the central control unit 28 between the central heating device 26 and the feed and return pipes 36 of the radiator 34 in the room. It will be clear that each radiator 34 in this way can be controlled individually by the central control unit 28, so that each room temperature can be regulated individually. For ease of installation it is preferred to use an integrated pipe for the feed and return pipes 36 according to Fig. 10. With the integrated pipe 36 of Fig. 10 all radiators 34 of Fig. 5 can be very easily installed and connected to the central control unit 28. Preferably, the integrated pipe 36 also contains the lead 21 for interconnecting the temperature sensor in each room and the central control unit 28. It will be clear that the control unit 28 contains a suitable number of control valves for connecting one or more radiators 34 to the central heating device 26. The system may comprise ventilating units as described in connection with Fig. 4.

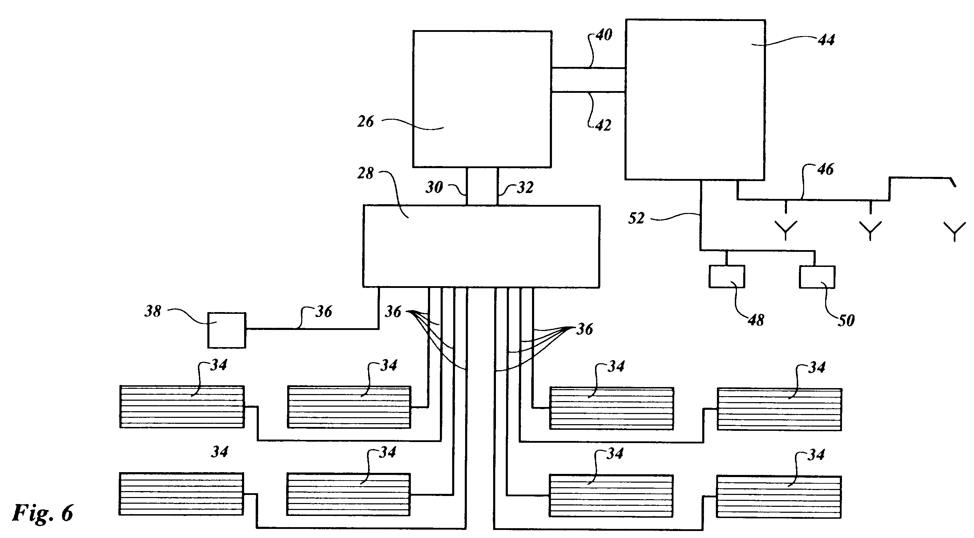

The system according to Fig. 6 incorporates the system of Fig. 5, but has a few additional features to make it more versatile. In Fig. 6, heating fluid from the central heating device 26 can be directed by the central control unit 28 to an indirectly heated washing machine or laundry dryer 38, which basically is connected to the central control unit 28 with an integrated pipe of the type shown in Fig. 10. In this case, the lead 21 in the integrated pipe 36 signals a heat demand from the laundry dryer 38 to the central control unit 28, making the central control unit 28 supplying fluid heated in the central heating device 26 to the laundry dryer 38.

According to Fig. 6, the central heating device 26 is further connected by a feed pipe 40 and a return pipe 42 to an indirectly heated hot water boiler 44 for supplying hot domestic water through a pipe 46 and hot water for a hot-fill washing machine 48 and a dish-washer 50 through a pipe 52.

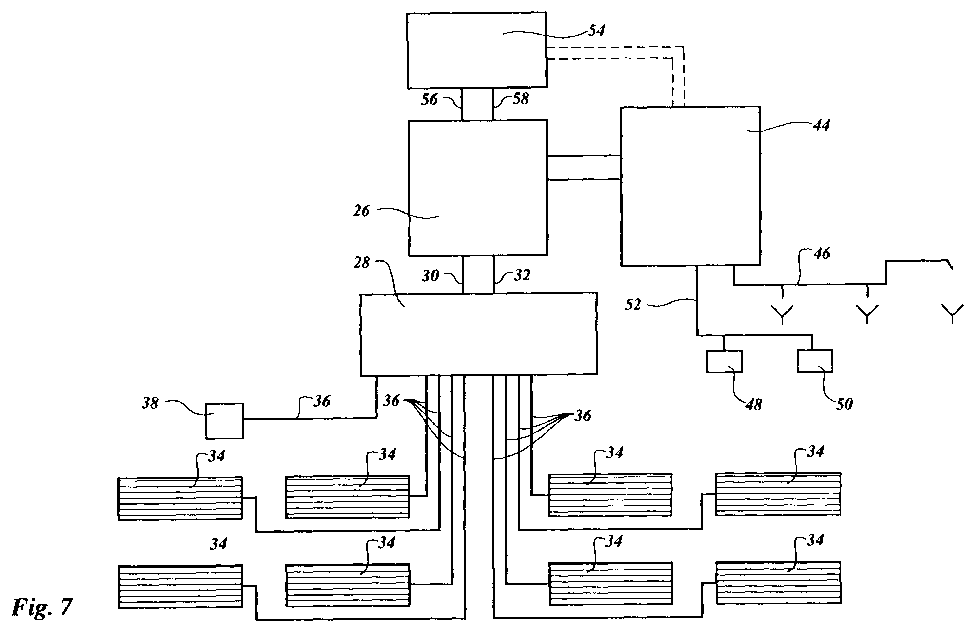

The system shown in Fig. 7 incorporates the system of Fig. 3, and additionally has one or more high performance solar panels 54 connected to it by a feed pipe 56 and a return pipe 58 leading to the central heating device 26. The heat needed in the system of Fig. 7 is basically generated by the solar panel(s) 54 and supplemented by the central heating device 26 in case the heat demand exceeds the heat generated by the solar panel(s) 54.

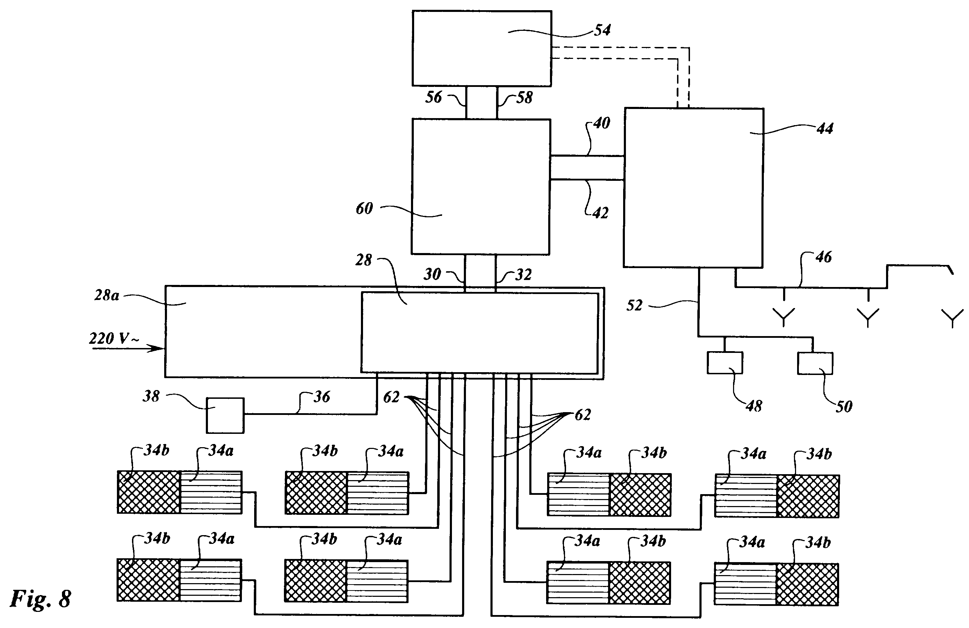

The system according to Fig. 8 differs from the system shown in Fig. 7 in that it contains a gas-fired absorption chiller/heater 60, making it possible not only to supply convectors 34a with a heating fluid to the control unit 28, but also supplying the convectors 34a with a cooling fluid for lowering the temperature in a room. The convector 34a in each room is combined with a ventilating unit 34b for ventilating the room and heat recovery. The combined convector/ventilating units 34a, 34b are connected to the central control unit by integrated pipes of the type as shown in Figs. 11 and 12.

The integrated pipe 62 shown in Fig. 11, which pipe may have an outer diameter of approximately 28 mm, has a feed duct 64 for feeding a heating fluid or a cooling fluid to the convector 34a, a return duct 66 for the heating or cooling fluid, four air ducts 68 for drawing air from the room and supplying it to a gas analysis unit in the central control unit 28, two electrical leads 70 for controlling actuators in the convector/ventilating unit 34a, 34b, 24 V DC power supply leads 72 for the fan(s) in the ventilating unit 34b, a room temperature sensor cable 74, and a spare sensor cable 76. Fig. 12 shows a different arrangement of the same type of ducts and leads as in the integrated pipe of Fig. 11, but in another spatial orientation, which makes the integrated pipe of Fig. 12 more flexible in one direction.

Returning now to Fig. 8, it will be clear that the central control unit 28 in the system shown is extended with a part 28a containing a central gas analysis unit and a central DC power supply.

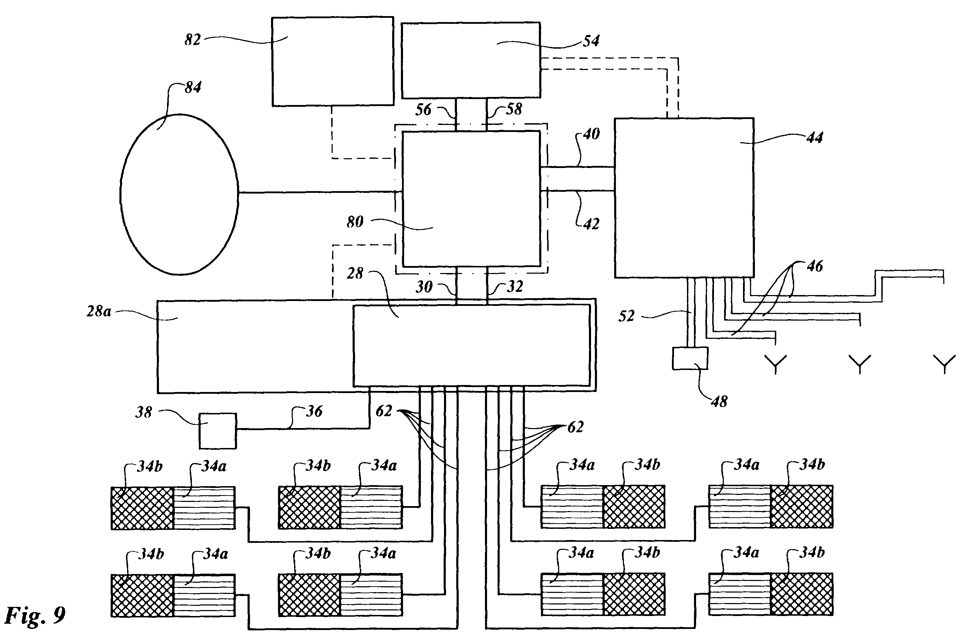

The system of Fig. 9 differs from the system of Fig. 8 in that it contains a cogeneration gas-fired chiller/heater/power supply and an additional photovoltaic solar panel 82 for generating the energy needed. Further, it is possible to couple the system to a district heating system 84, allowing for an abandonment of a gas supply to the system.

## Claims

1. Room atmosphere conditioning unit for conditioning the atmosphere in a room of a building, comprising:
first heat exchanging means (100); and
a ventilating unit containing at least one fan (104) for drawing in air directly from outside the building through an inlet duct and through the first heat exchanging means (100) into the room, and blowing air out of the room through the first heat exchanging means (100) and through an outlet duct, characterized in that the first heat exchanging means (100) and the ventilating unit are integrated with second heat exchanging means (110) adapted to be connected to a fluid pipe system (114) for distributing a heating fluid or a cooling fluid from a heat generating means or a cold generating means, respectively, to the second heat exchanging means (110).

2. Room atmosphere conditioning unit according to claim 1, characterized in that it comprises a sandwiched structure of the first heat exchanging means (100), a layer of insulating material (112), and the second heat exchanging means (110), the first and the second heat exchanging means extending generally vertically.

3. Room atmosphere conditioning unit according to claim 1, characterized in that it comprises a stacked structure, the first heat exchanging means (100) being placed above the second heat exchanging mans (110).

4. Room atmosphere conditioning unit according to any of claims 1-3, characterized in that the air inlet duct and the air outlet duct consist of a narrow slit having a width which is generally equal to the width of the room atmosphere conditioning unit.

5. Room atmosphere conditioning unit according to any of claims 1-4, characterized in that it is adapted to remove air from the room near the bottom side of the unit.

6. Room atmosphere conditioning unit according to any of claims 1-5, characterized by means for measuring the quality of the air in the room and operating the fan or fans of the ventilating unit in the room when the air quality in the room is below a predetermined level.

## Patentansprüche

1. Raumklimaeinheit zum Klimatisieren eines Gebäuderaumes, mit:
einem ersten Wärmetauscher (100); und
einer Lüftungseinheit, die wenigstens ein Gebläse (104) aufweist, um direkt von der Außenseite des Gebäudes durch ein Einlaßrohr und durch den ersten Wärmetauscher (100) Luft in den Raum zu saugen und um aus dem Raum durch den ersten Wärmetauscher (100) und durch ein Auslaßrohr Luft auszublasen,
dadurch gekennzeichnet, daß
der erste Wärmetauscher (100) und die Lüftungseinheit mit einem zweiten Wärmetauscher (110) kombiniert sind, der dafür ausgelegt ist, mit einem Fluidrohrsystem (114) verbunden zu werden, um ein Heizfluid oder ein Kühlfluid von einer Wärmeerzeugungseinrichtung bzw. einer Kälteerzeugungseinrichtung an den zweiten Wärmetauscher (110) zu verteilen.

2. Raumklimaeinheit nach Anspruch 1, die eine Schichtstruktur aus dem ersten Wärmetauscher (100), einer Isoliermaterialschicht (112) und dem zweiten Wärmetauscher (110) aufweist, wobei sich der erste und der zweite Wärmetauscher im allgemeinen vertikal erstrecken.

3. Raumklimaeinheit nach Anspruch 1, die eine Stapelstruktur aufweist, wobei der erste Wärmetauscher (100) oberhalb des zweiten Wärmetauschers (110) angeordnet ist.

4. Raumklimaeinheit nach einem der Ansprüche 1 bis 3, worin das Lufteinlaßrohr und das Luftauslaßrohr aus einem engen Schlitz bestehen, der eine Breite hat, die im allgemeinen gleich der Breite der Raumklimaeinheit ist.

5. Raumklimaeinheit nach einem der Ansprüche 1 bis 4, die dafür ausgelegt ist, daß sie Luft von dem Raum nahe der Bodenseite der Einheit entfernt.

6. Raumklimaeinheit nach einem der Ansprüche 1 bis 5, die Einrichtungen zum Messen der Luftqualität in dem Raum und zum Betätigen des Gebläses oder der Gebläse der Lüftungseinheit in dem Raum aufweist, wenn die Luftqualität in dem Raum unterhalb eines bestimmten Niveaus liegt.

## Revendications

1. Unité de conditionnement de l'atmosphère de pièces pour conditionner l'atmosphère dans une pièce d'un bâtiment, comprenant :
- des premiers moyens d'échange thermique (100) ; et
- une unité de ventilation contenant au moins un ventilateur (104) pour aspirer directement dans la pièce de l'air en provenance de l'extérieur du bâtiment à travers un conduit d'admission et à travers les premiers moyens d'échange thermique (100), et pour refouler l'air hors de la pièce à travers les premiers moyens d'échange thermique (100) et à travers un conduit d'évacuation,
caractérisée en ce que les premiers moyens d'échange thermique (100) et l'unité de ventilation sont intégrés avec des deuxièmes moyens d'échange thermique (110) adaptés pour être raccordés à un système de tuyaux de fluide (114) pour distribuer un fluide de chauffage ou un fluide de refroidissement en provenance de moyens générateurs de chaleur ou de moyens générateurs de froid, respectivement, aux deuxièmes moyens d'échange thermique (110).

2. Unité de conditionnement de l'atmosphère de pièces selon la revendication 1, caractérisée en ce qu'elle comprend une structure sandwich des premiers moyens d'échange thermique (100), d'une couche de matériau isolant (112) et des deuxièmes moyens d'échange thermique (110), les premiers et deuxièmes moyens d'échange thermique s'étendant généralement verticalement.

3. Unité de conditionnement de l'atmosphère de pièces selon la revendication 1, caractérisée en ce qu'elle comprend une structure empilée, les premiers moyens d'échange thermique (100) étant placés au-dessus des deuxièmes moyens d'échange thermique (110).

4. Unité de conditionnement de l'atmosphère de pièces selon l'une des revendications 1 à 3, caractérisée en ce que le conduit d'admission d'air et le conduit d'évacuation d'air consistent en une fente étroite ayant une largeur sensiblement égale à la largeur de l'unité de conditionnement de l'atmosphère de la pièce.

5. Unité de conditionnement de l'atmosphère de pièces selon l'une des revendications 1 à 4, caractérisée en ce qu'elle est adaptée pour extraire l'air de la pièce au voisinage du côté inférieur de l'unité.

6. Unité de conditionnement de l'atmosphère de pièces selon l'une des revendications 1 à 5, caractérisée par des moyens pour mesurer la qualité de l'air dans la pièce et pour actionner le(s) ventilateur(s) de l'unité de ventilation dans la pièce lorsque la qualité de l'air dans la pièce se trouve en dessous d'un niveau prédéterminé.
